Europäisches Patentamt

(19) European Patent Office

Office européen des brevets

(11) Publication number: **0 074 086**
**A2**

## (12) EUROPEAN PATENT APPLICATION

(21) Application number: **82108063.7**

(22) Date of filing: **01.09.82**

(51) Int. Cl.³: **G 12 B 9/02**
**H 02 B 7/06**

(30) Priority: **02.09.81 JP 131062/81 U**

(43) date of publication of application:
**16.03.83 Bulletin 83/11**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo 100(JP)**

(72) Inventor: **Tsuruta, Keiji**
**4-7-4, Kiyoshi Kojin City of Takarazuka**
**Hyogo Prefecture(JP)**

(72) Inventor: **Tsutsumi, Nagayuki**
**2-8-A10-710, Yamada Nishi**
**City of Suita Osaka(JP)**

(74) Representative: **Kern, Ralf M., Dipl.-Ing. et al,**
**Patentanwälte Kern, Popp, Sajda, von Bülow & Bolte**
**Postfach 86 06 24 Widenmayerstrasse 48**
**D-8000 München 86(DE)**

(54) Package substation.

(57) The invention deals with a package substation in which a plurality of elements (3, 5, 6) which constitute a substation are accommodated in a tank (1), the elements (3, 5, 6) are isolated by separator walls (2, 4, 9) which constitute accommodation chambers (7, 8, 10), and said accommodation chambers (7, 8, 10) are filled with insulation fluids that are adapted to the elements (3, 5, 6) which are accommodated in said accommodation chambers (7, 8, 10).

FIG. 3

EP 0 074 086 A2

PACKAGE SUBSTATION

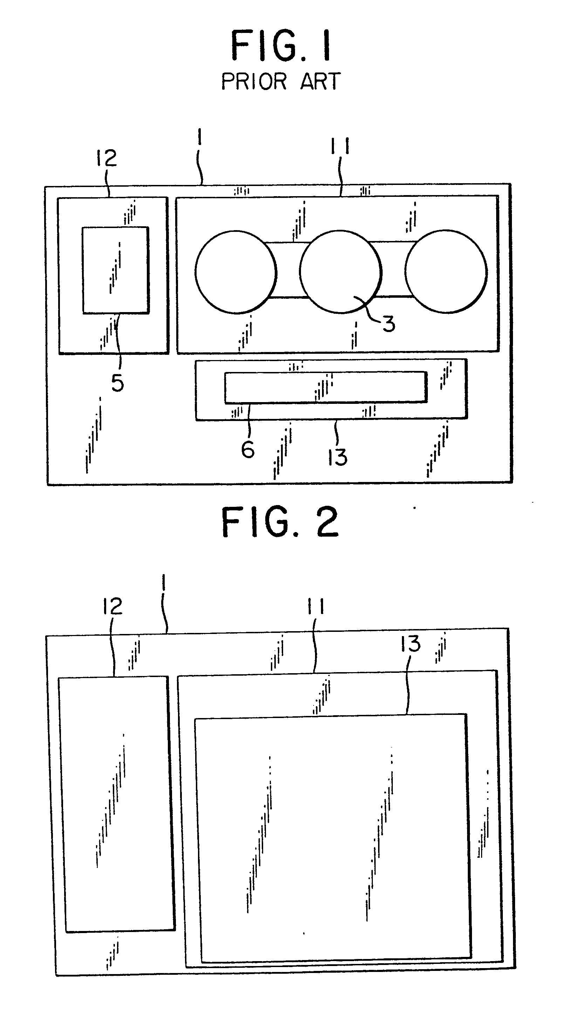

This invention relates to a package substation which consists of a transformer, a switch gear of the high-voltage side, and a low-voltage switch-board. So far, the package substation of this type has been made up, as shown in Figs. 1 and 2, of a transformer container 11 which accommodates elements 3, a high-voltage side switch gear container 12 accommodating an element 5, and a low-voltage switch-board container 13 accommodating an element 6, the containers being installed in a separately constructed substation tank 1. The above-mentioned conventional setup, however, involves defects as mentioned below. Namely, an increased number of containers is required to accommodate the elements and increased amounts of steel boards are required to construct the substation tank, resulting in increased manufacturing cost. Furthermore, weights and dimensions are increased so that increased costs are required for transportation and installation.

This invention is to eliminate the above-mentioned defects inherent in the conventional package substations, and its object is to provide a package substation which can be cheaply constructed, which is light in weight, and which is small in size.

The invention as claimed avoids the drawbacks of the prior art and proposes a package substation in which a plurality of elements which constitute a substation are accommodated in a tank, wherein the elements are isolated by separator walls which constitute accommodation chambers, and said accommodation chambers are filled with insulation fluids that are adapted to the elements which are accommodated in said accommodation chambers.

One way of carrying out the invention is described in detail below with reference to the accompanying drawings which illustrate the prior art and one specific embodiment according to the invention, in which

Fig. 1   is a plan view of a conventional package substation;

Fig. 2   is a side view of Fig. 1;

Fig. 3   is a plan view showing an embodiment of this invention; and

Fig. 4   is a side view of Fig. 3.

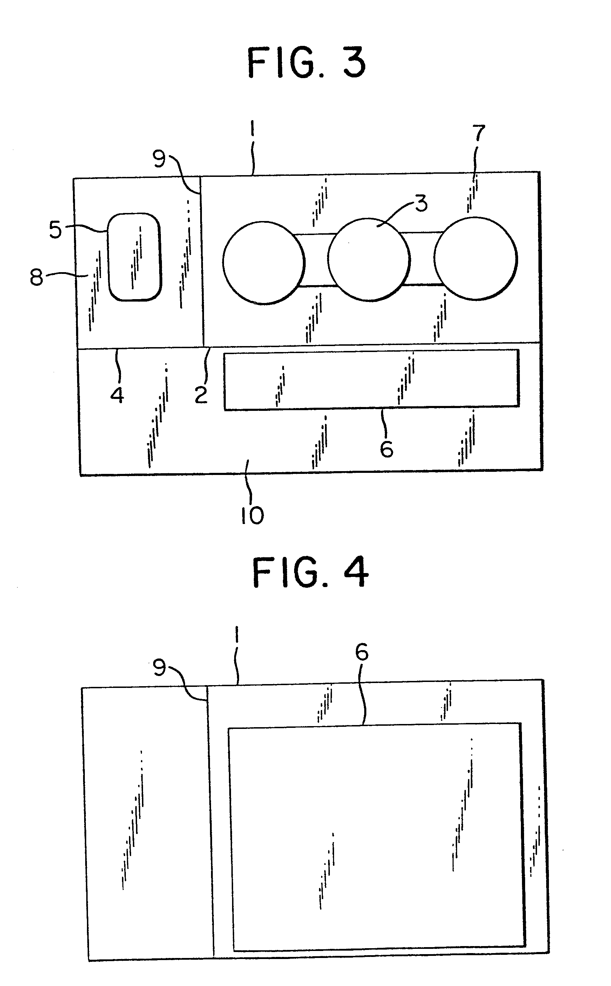

Figs. 3 and 4 are a plan view and a side view, respectively, showing an embodiment of this invention, in which reference numeral 1 denotes a substation tank, 2 denotes a separator wall for isolating the elements 3 of the transformer, 4 denotes a separator wall for isolating the element 5 of the high-voltage switch gear, 6 denotes an element which constitutes the low-voltage switch-board, 7 denotes a transformer chamber, 8 denotes a chamber of high-voltage switch gear, and 9 denotes a member for separating the transformer chamber 7 from the high-voltage switch gear chamber 8. The separating member 9 does not consist of an exclusively designed board but is formed simply as a section of the substation tank 1. Reference numeral 10 denotes a chamber of low-voltage switch-board. The transformer chamber 7 is filled with an insulation fluid such as mineral oil $SF_6$ or $C_2F_6$, and the high-voltage switch gear chamber 8 is also filled with an insulation fluid such as mineral oil $SF_2$ or $C_2F_6$. The low-voltage switchboard chamber 10 is at atmospheric pressure.

Thus, the substation tank 1 is divided into three chambers 7, 8 and 10, and the separator walls 2, 4 are so provided that these chambers are filled with optimum insulation fluids. Consequently, the object can be accomplished without providing the transformer and the high-voltage switch gear with exclusively designed tanks. In other words, the invention provides a package substation which is light in weight, which is compact in size, and which can be cheaply constructed.

0074086

CLAIM:

A package substation in which a plurality of elements (3,5, 6) which constitute a substation are accommodated in a tank (1), the elements (3,5,6) are isolated by separator walls (2,4,9) which constitute accommodation chambers (7,8, 10), and said accommodation chambers (7,8,10) are filled with insulation fluids that are adapted to the elements (3,5,6) which are accommodated in said accommodation chambers (7,8,10).

# FIG. I
## PRIOR ART

# FIG. 2

# FIG. 3

# FIG. 4